# EUROPEAN PATENT APPLICATION

(11) **EP 4 610 914 A1**
(43) Date of publication of application: **03.09.2025**
(21) Application number: 25161146.3
(22) Date of filing: 28.02.2025
(51) Int. Cl.: G06Q 30/0201, G06Q 30/0251

(54) **METHOD AND SYSTEM FOR REPRODUCING AUDIO AND/OR IMAGE AND/OR VIDEO CONTENTS**

(30) Priority: 01.03.2024 IT 202400004663
(71) Applicant: Coppola, Gennaro, 04100 Latina (IT)
(72) Inventor: Coppola, Gennaro, 04100 Latina (IT)
(74) Representative: ABM Agenzia Brevetti & Marchi

(57) **Abstract**

Method and system for reproducing audio and/or image and/or video contents comprising the steps of positioning at least one antenna for mobile communication (10) at a predetermined working position to receive and/or transmit data (51a,51b,51i,...,51n) from and/or towards at least a mobile electronic device (50) placed at a determined instant (ti) within a predetermined coverage cone (200) and associated to at least one person (100). A step is, then, provided for acquiring by the antenna for mobile communication (10) data (51a, 51b, 51i,...,51n) related to at least a person (100) associated to the mobile electronic device (50) and a step for sending the data (51a, 51b, 51i,...,51n) to a main processing unit (300). This processes the acquired data by an artificial intelligence software (AI) on the basis of logics of clustering for individuating at least a preponderant homogeneous group of people (Gi*). A step follows for selecting at least an audio and/or image and/or video content (55*) corresponding to the preponderant homogeneous group of people (Gi*) and a step for reproducing the same by at least an audio and/or image and/or video reproduction device (60)

## Description

### Field of the invention

The present invention relates to a method for reproducing audio and/or image and/or video contents, in particular but not exclusively advertising and promotional messages, towards to a determined target of people who, at a determined instant, are placed within a predetermined geographical area, in particular a public place such as a square, a street, a stadium, an arena, a theatre, and similar places.

The invention, furthermore, relates to a system for reproducing the aforementioned audio and/or image and/or video contents.

### Description of the prior art

As known, in public places, such as squares, streets, of urban cities, and in general public places where people walk, or where they temporarily gather for different purposes, advertising billboards or posters are often put up**.**

However, these advertising posters or billboards are able to transmit to people, who are present, only one advertising message and, above all, independently from the target of people who are present at that moment in the public place. Therefore, the effectiveness of the advertising message is not so sure.

It is also known to install advertising screens for reproducing video or images for advertising purposes in squares or streets of urban cities, and, therefore, open public places, but also at shop windows or shopping centres, as well as stadiums, as well as in closed places such as indoor stadiums, or other places where people gather, in such a way to transmit the advertising message before or after a sporting event or a different kind of event.

However, also in this case, even though it is possible to reproduce on these devices, normally LED screens, a determined number of predetermined images or video, the effectiveness of the transmitted advertising message is not guaranteed, but rather in a random way, because strongly depending on the tasters and the needs of people who are present at a determined instant in a determined area, that means the area where the aforementioned LED screen can be seen.

Some examples of methods of prior art for reproducing audio and/or video contents with the aforementioned drawbacks are described in US2011/309946, US2012/315858 and US2019/378176.

### Summary of the invention

It is, therefore, an object of the present invention to provide a method for reproducing audio and/or image and/or video contents, in particular but not exclusively advertising or promotional messages, which is able to overcome the aforementioned drawbacks of the prior art.

It is, in particular, an object of the present invention to provide a method for reproducing audio and/or image and/or video contents in a very effective way because selected on the basis of the target of people present at a determined instant in an area of enjoy of the content.

It is a particular object of the present invention to provide a method for reproducing audio and/or image and/or video contents at public places who are in the proximity of a construction site, in particular a public or private building under renovation or construction, in such a way to reduce the visual impact of the building site.

It is still an object of the present invention to provide a system for reproducing audio and/or image and/or video contents having analogous advantages.

These and other objects are achieved by the method, according to the invention, for reproducing audio and/or image and/or video contents, whose main characteristic is to provide the steps of:
- positioning at least one antenna for mobile communication at a predetermined working position, said or each antenna for mobile communication being configured to receive and/or transmit data from and/or towards at least a mobile electronic device, in particular positioned in a predetermined coverage area of said antenna for mobile communication, preferably a predetermined coverage cone of the antenna for mobile communication, said mobile electronic device being associated to at least one person;
- acquiring by said or each antenna for mobile communication from said or each mobile electronic device present in said predetermined coverage area, in particular of said predetermined coverage cone, of a plurality of data relating to said or each person associated to it, in particular said data comprising age and gender of said person;

- sending said data to a main processing unit;
- processing said acquired data by said main processing unit by an artificial intelligence software (AI), in particular a market segmentation software, said processing step comprising the steps of:
   - associating to said or each person present in said predetermined coverage area, in particular in said predetermined coverage cone, said antenna for mobile communication to at least one determined homogeneous group of people (Gi) on the basis of said data, each homogeneous group of people (Gi) of said plurality corresponding to a predetermined range of values of said data (Pi);
   - identifying at least a preponderant homogeneous group of people (Gi*) that means with the greater number of people associated to the same to the end of the aforementioned associating step;
- selecting at least one audio and/or image and/or video content among a plurality of audio and/or image and/or video contents present within a predetermined database, said selected audio and/or image and/or video content corresponding to said preponderant homogeneous group of people (Gi*);
- sending said or each selected audio and/or image and/or video content to at least one audio and/or image and/or video reproduction device;
- reproducing said or each selected audio and/or image and/or video content on said or each audio and/or image and/or video reproduction device, in particular in such a way that said or each person placed within a predetermined geographical area can enjoy the or each selected and reproduced audio and/or image and/or video content.

Other features of the invention and related embodiments are set out in the dependent claims.

In particular, only said or each person placed in a predetermined geographical area can enjoy the or each selected and reproduced audio and/or image and/or video content. More in particular, the geographical area covered by the predetermined coverage cone of the antenna for mobile communication.

In particular, an acquiring step can be, furthermore, provided for acquiring at least one image by at least a digital camera having a predetermined field of view (FOV). More in particular, the or each aforementioned digital camera is positioned in such a way that the aforementioned field of view is adapted to intersect the aforementioned coverage cone.

Furthermore, a step is provided for sending, in particular in real time, the or each image acquired by a secondary processing unit. This is, advantageously, configured to process the or each image acquired by at least a software, preferably an artificial intelligence software, for obtaining supplementary data comprising the number of people present within the predetermined field of view (FOV) and for sending the aforementioned supplementary data to the main processing unit.

In particular, the main processing unit is configured to combine the data sent by the antenna for mobile communication and the supplementary data sent by the or each digital camera obtaining a plurality of overall or aggregated data, on the basis of which is adapted to carry out the aforementioned processing step.

In particular, the aforementioned audio and/or image and/or video reproduction device can be installed near to the aforementioned predetermined coverage cone. More in particular, the aforementioned audio and/or image and/or video reproduction device can be installed within a predetermined distance from the aforementioned antenna for mobile communication.

In particular, the or each audio and/or image and/or video reproduction device can be fastening, advantageously by removable fastening members, to a reticular support structure. More in particular, the aforementioned audio and/or image and/or video reproduction device is configured to reproduce said audio content and/or said video content in such a way to be heard and/or watched by said or each person present in said predetermined coverage cone.

In an embodiment foreseen, the aforementioned reticular support structure can be a scaffolding, in particular a scaffolding of a construction site, for example installed in front of at least a facade of a building under renovation. In this way, from one hand, the aesthetics of the scaffolding is highly improved, for example, by installing at least an audio and/or image and/or video reproduction device, such as a high definition maxi-screen, and on the other hand, with the audio and/or image and/or video content transmitted by the aforementioned reproduction device, preferably an advertising message, it is possible to reach all the people who are present at a certain instant near the building under renovation. In addition to the above, the method, according to the present invention, allows to reach a target of people in a targeted manner, by transmitting contents which, on the basis of the detected and processed data, as described above, in particular on the basis of the age and gender of the people who are present near to the reproduction device, but also other data, such as geographical or behavioural factors, are highly effective.

In a preferred embodiment, the aforementioned antenna for mobile communication can be a directional antenna, that means an antenna which receives and/or transmits in specific directions. In this way, in addition to reduce possible interferences, it is also possible to detect the smartphones, as well as other electronic mobile devices which are present in a determined coverage area, in particular in a determined coverage cone.

In particular, the aforementioned antenna for mobile communication can be a "small cell" selected among: a femtocell, a picocell and a microcell, also called "metrocell".

Preferably, the aforementioned antenna for mobile communication can be selected among: a 4G micro-cell, a 5G micro-cell, or a 6G micro-cell. More in particular, the aforementioned micro-cell can have a coverage distance comprised between 10 m and 500 m, advantageously between 20 m and 200 m.

In particular, the aforementioned audio and/or image and/or video reproduction device is associated to a predetermined field of visibility and/or audio coverage, or coverage audio angle. More in particular, during the aforementioned acquiring step, the data are acquired from said or each mobile electronic device positioned within said field of vision and/or listening of said audio and/or image and/or video reproduction device. More precisely, during the aforementioned acquiring step the data are acquired only from said or each mobile electronic device, in particular at least a part of these, which are positioned within said field of vision and/or listening of said audio and/or image and/or video reproduction device.

In an alternative embodiment of the invention, a shielding step can be, furthermore, provided, in particular by a shielding member the or each antenna for mobile communication in determined positions, in such a way that the aforementioned coverage cone comprises only the portion positioned within the aforementioned predetermined geographical area, in particular within the field of visibility and/or of listening of the aforementioned audio and/or image and/or video reproduction device.

In an embodiment of the invention, the aforementioned acquiring step is carried out by at least a first and a second digital camera.

In particular, the first digital camera is arranged to acquire with the first field of view, or FOV1, a first image having a first area A1. More in particular, the aforementioned second digital camera is configured to acquire a plurality of images with a second field of view FOV2, in general less than the first field of view FOV1, i.e.: FOV2<FOV1.

Advantageously, each image acquired by the second digital camera has a respective area A2i which coincides, in particular, with a portion of area A1 of the image acquired by the first digital camera.

In particular, the second digital camera is configured to acquire the aforementioned plurality of images by moving, for example rotating at a predetermined angle around at least one rotation axis, between an acquisition of an image and an acquisition of a successive image, in such a way to acquire each image at a respective area A2i coincident with a predetermined portion of area A1 of the image acquired by the first digital camera. More precisely, the acquiring step of said plurality of images by the second digital camera is stopped once that all the area A1 of the image acquired by the first digital camera is covered, that means when Σi(A2i)=A1. In this way, each image acquired by the second digital camera at a determined position (xi,yi) of the image acquired by the first digital camera can have a high resolution. Therefore, the successive processing step of the aforementioned plurality of images by the secondary processing unit can be more accurate.

In particular, the or each digital camera can be positioned on the aforementioned reticular support structure, for example on the aforementioned scaffolding, preferably engaged to the same. In this way, the or each digital camera acquires images of the aforementioned field of view comprising the aforementioned coverage cone of the antenna for mobile communication.

In particular, in the aforementioned database a plurality of audio and/or image and/or video contents can be present, each of which preliminarily associated to at least a predetermined homogeneous group of people.

In particular, the aforementioned directional antenna can have a coverage distance (dc) comprised between 50 m and 300 m, advantageously between 50 m and 200 m, preferably between 80 m and 120 m, for example about 100 m. More in particular, the aforementioned directional antenna can have an angle of inclination (αi) comprised between 30° and 60°, advantageously comprised between 35° and 55°, preferably between 40° and 50°, for example about 45°.

According to another aspect of the invention, a system for reproducing audio and/or image and/or video contents, said system being characterized in that it comprises:
- at least an antenna for mobile communication positioned at a predetermined working position, said or each antenna for mobile communication being configured to receive and/or transmit data from and/or towards at least a mobile electronic device placed at a determined instant (ti) in a predetermined coverage cone of said antenna for mobile communication, said mobile electronic device being associated to at least a person;
- at least a reproduction device of audio and/or image and/or video contents;
- a main processing unit configured to process by an artificial intelligence software (AI) said acquired data by said antenna for mobile communication, said processing step comprising the steps of:
   - associating said or each person to at least one determined homogeneous group of people (Gi) on the basis of said data, wherein each homogeneous group of people (Gi) of said plurality corresponds to a predetermined range of values of said data;
   - determining at least a preponderant homogeneous group of people (Gi*), said preponderant homogeneous group of people (Gi*) being the homogeneous group of people with the greater number of people associated to the same;
   - select at least an audio and/or image and/or video content between a plurality of audio and/or image and/or video contents which are present in a predetermined database, said selected audio and/or image and/or video content corresponding to said preponderant homogeneous group of people (Gi*)
   - sending said or each selected audio and/or image and/or video content to said or each reproduction device of audio and/or image and/or video contents, in such a way that a plurality of people placed at said determined instant (ti) in a predetermined geographical area can enjoy said or each selected and reproduced audio and/or image and/or video content.

### Brief description of the drawings

The invention will be now illustrated with the following description of an exemplary embodiment thereof, exemplifying but not limitative, with reference to the attached drawings wherein:
- Fig. 1 diagrammatically shows in a block diagram the main steps of a first embodiment of the method, according to the invention, for reproducing audio and/or image and/or video contents;
- Fig. 2 diagrammatically shows the functioning logic of a first embodiment of the system, according to the invention, for reproducing audio and/or image and/or video contents;
- Fig. 3 diagrammatically shows a front elevation perspective view of the main components of the system, according to the invention, for reproducing audio and/or image and/or video contents;

- Fig. 4 diagrammatically shows a front elevation perspective view of the main components of an alternative embodiment of the system of figure 3;
- Fig. 5 diagrammatically shows the functioning logic of an alternative embodiment of the system of figure 2;
- Fig. 6 diagrammatically shows a block diagram of the main steps of an alternative embodiment of the method illustrated in figure 1;
- Figures from 7 to 9 diagrammatically show front elevation perspective views of the main components of some embodiments of the system, according to the invention, for reproducing audio and/or image and/or video contents.

### Detailed description of some exemplary embodiments of the invention

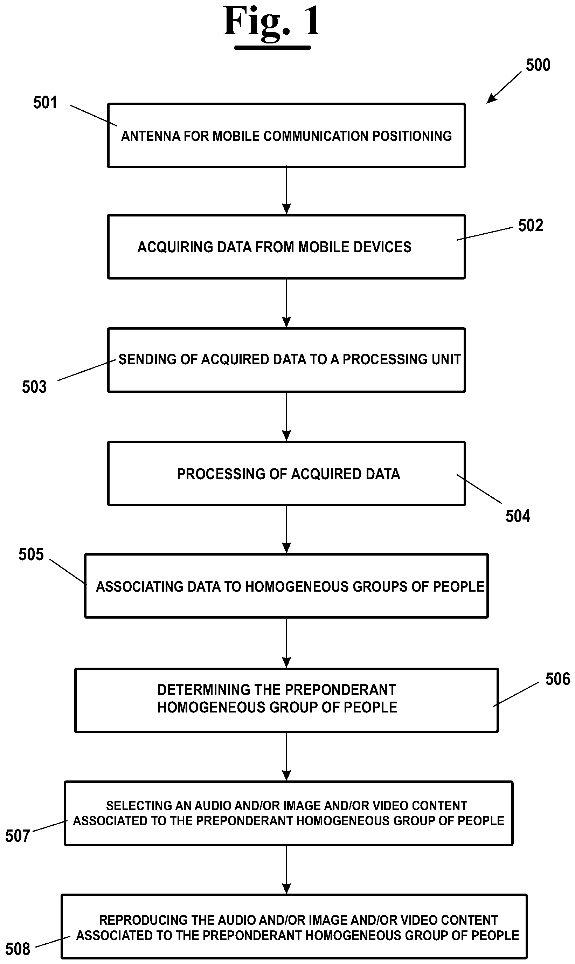

In the block diagram 500 of figure 1 are diagrammatically shown the main steps of the method, according to the invention, for reproducing audio and/or image and/or video contents, in particular for advertising or informative purpose, in a determined public place, for example a square, or a street, of an open-air city centre, but also in a closed place, such as a stadium, an arena, or a shopping centre.

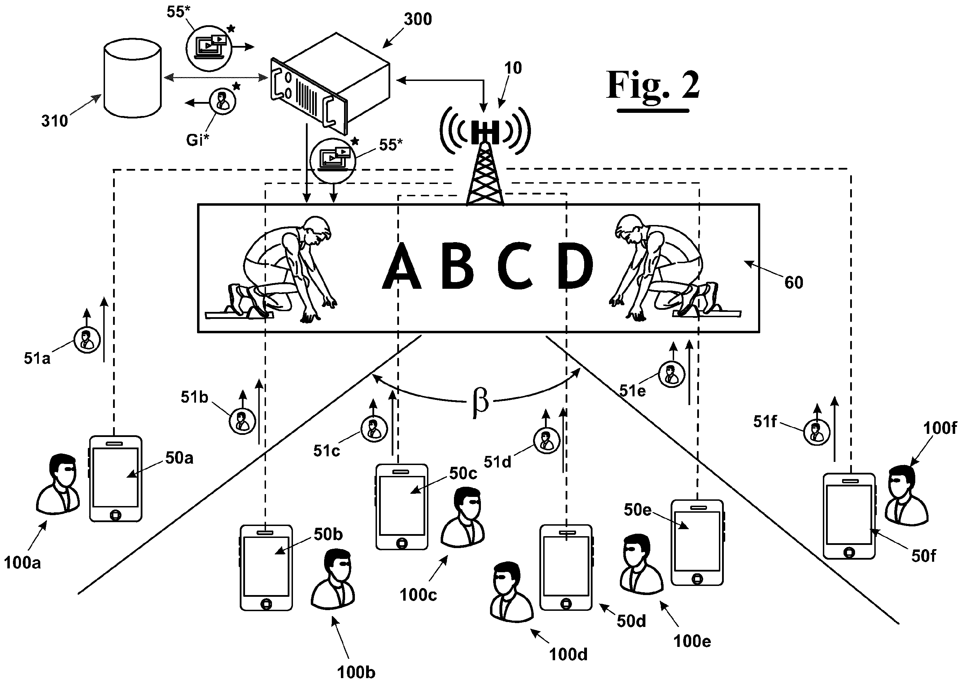

As diagrammatically shown in figure 1, the method provides the steps of positioning at least one antenna for mobile communication 10, block 501, at a predetermined working position, for example on the roof of a building (see figure 2). In particular, the or each aforementioned antenna for mobile communication 10 can be configured to receive and/or transmit within a predetermined coverage area 250, in particular a predetermined coverage cone 200 comprising the aforementioned coverage area 250, of the antenna for mobile communication, up to a determined coverage area 250, in particular the base of the aforementioned coverage cone, comprising for example a square in front of the aforementioned building 400, or one or more streets of a residential area.

More in particular, the or each antenna for mobile communication 10, preferably a micro-cell of mobile cellular network, is configured to receive and/or transmit data 51a,51b,51i,...,51n from and/or towards at least a mobile electronic device 50 placed at a determined instant ti within the aforementioned predetermined coverage cone 200 and associated to at least one person 100. The aforementioned data, in particular aggregated data, can comprise at least a datum among: gender, age, city of residence, type of contract stipulated with the manager which owns the antenna for mobile communication 10, of the person 100 associated to the aforementioned mobile electronic device 50.

An acquiring step is, then, provided by the or each antenna for mobile communication 10 of the data 51a,51b,51i,...,51n sent by the or each mobile electronic device 50 placed in the aforementioned predetermined coverage cone 200, and related to the person associated to it, block 502. At this regard, it should be pointed out that when the mobile device 50 enters the coverage cone 200 of the antenna 10, advantageously the interruption of the connection with the mobile phone cell to which it was previously connected with. In particular, the antenna for mobile communication 10 will be, in general, a proprietary antenna, that means belonging to a determined network service provider. Therefore, both the acquiring step of data and the connection step will be limited to the mobile devices 50 linked by the contract to the same network service provider which owns the antenna 10. The other mobile devices 50', instead, will not be involved in the aforementioned data acquiring step. However, it is possible to easily determine the total number of the mobile devices which are likely present within a certain margin of uncertainty, at a determined instant ti within the coverage cone 200 of the antenna 10 by knowing the percentage of the market share of the network service provider.

A sending step follows, in particular in real time, of the aforementioned data 51a,..., 51n to a main processing unit 300, block 503. The main processing unit 300, then, provides to process the acquired data by an artificial intelligence software (AI), in particular a customer segmentation software, therefore in the specific case, of the people present in the coverage cone 200 of the antenna for mobile communication 10, block 504. Si ha, poi, an associating step on the basis of the detected data, of the or each person 100 associated to a mobile device 50 present in the aforementioned predetermined coverage cone 200, to at least one determined homogeneous group of people Gi, block 505. In particular, each homogeneous group of people Gi of the aforementioned plurality corresponds to a predetermined range of values of the aforementioned data 51a,51b,51i,...,51n. In this way, people 100 present in the area of interest, in particular in the coverage cone 200 of the antenna for mobile communication 10, are divided in a determined number of homogeneous groups of people, that means, likely, with similar interests and needs.

On the basis of the detected and processed data, the control unit 300, then, identify at least a preponderant homogeneous group of people Gi*, that means the group with the greater number of people associated to the same at the end of the aforementioned associating step, block 506. The control unit 30, then, provides to select at least an audio and/or image and/or video content among a plurality of audio and/or image and/or video contents present in a predetermined database 310, block 507. More precisely, the aforementioned selected audio and/or image and/or video content which corresponds to the aforementioned preponderant homogeneous group of people Gi*. More in detail, in the database 310 a determined number of audio and/or image and/or video contents is present, each of which associated to at least one determined homogeneous group of people, each of which associated to a predetermined range of values of the aforementioned data, in particular gender and age. Therefore, the aforementioned content is selected from the database 310 on the basis of clustering logics which provide to analyse the data related to the people 100 who are present at a determined instant ti within the coverage field 200 of the antenna 10.

A step follows for sending the aforementioned or each selected audio and/or image and/or video content on at least an audio and/or image and/or video reproduction device 60, which provides to reproduce the same, block 508. In this way, in particular, a plurality of people placed at the aforementioned determined instant ti in a predetermined geographical area, in particular at the aforementioned coverage area 250, can enjoy the or each selected and reproduced audio and/or image and/or video content 55*.

In particular, as for example diagrammatically shown in figure 2, the aforementioned audio and/or image and/or video reproduction device 60 can be a digital screen, or a giant screen, for example a LED screen. More in particular, the aforementioned reproduction device 60 is arranged to reproduce the aforementioned selected audio and/or image and/or video content by the main processing unit 300 following to the aforementioned processing step, or clustering, of people present at a determined instant ti in the coverage cone 200 of the antenna for mobile communication 10. In this way, the aforementioned audio and/or image and/or video content can reach all the people 100 present near to the aforementioned reproduction device 60. More precisely, the people placed within the angle of vision β of the screen 60, and/or the audio coverage angle, that means the maximum angle of view of the screen and/or the coverage audio at which people can enjoy with an acceptable quality the reproduced video and/or audio contents. In particular, the aforementioned reproduced audio and/or image and/or video content 55* can be watched at least by the or each person 100 who is present in the aforementioned coverage cone 200 of the antenna for mobile communication 10.

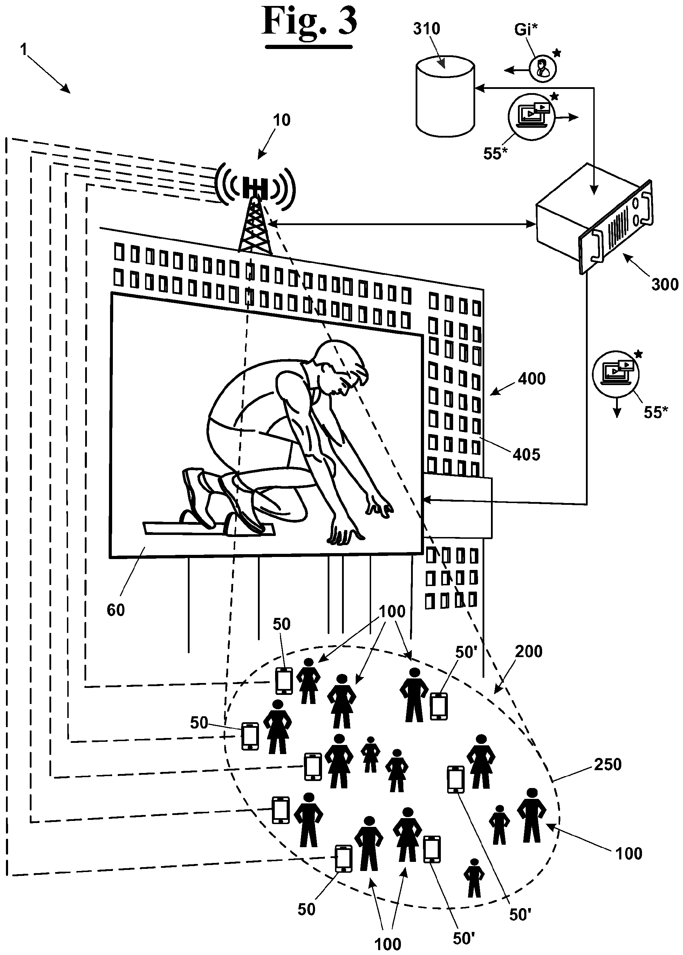

In figure 3 the case is diagrammatically shown that the aforementioned audio and/or image and/or video reproduction device is a digital screen 60. This can be fastened, or anchored, for example by fastening members, which can be removed from or that are integral to, a facade 405 of a building 400. In particular, as diagrammatically shown in figure 3, the mobile electronic devices 50 which send at instant ti the data 51a,51b,51i,...,51n to the antenna for mobile communication 10 are only those that have come network service provider, the owner/manager of the antenna for mobile communication 10. More in particular, from the number of mobile electronic devices 50 which send the aforementioned data 51, by knowing the percentage of market of the network service provider to which they belong, it is possible to calculate, at least approximately, the total number of mobile electronic devices 50 and, therefore, of people present in the coverage cone 200 of the antenna 10 in order to know the total number of people who are present in the coverage cone 200 at the moment at which the aforementioned content 55* is reproduced.

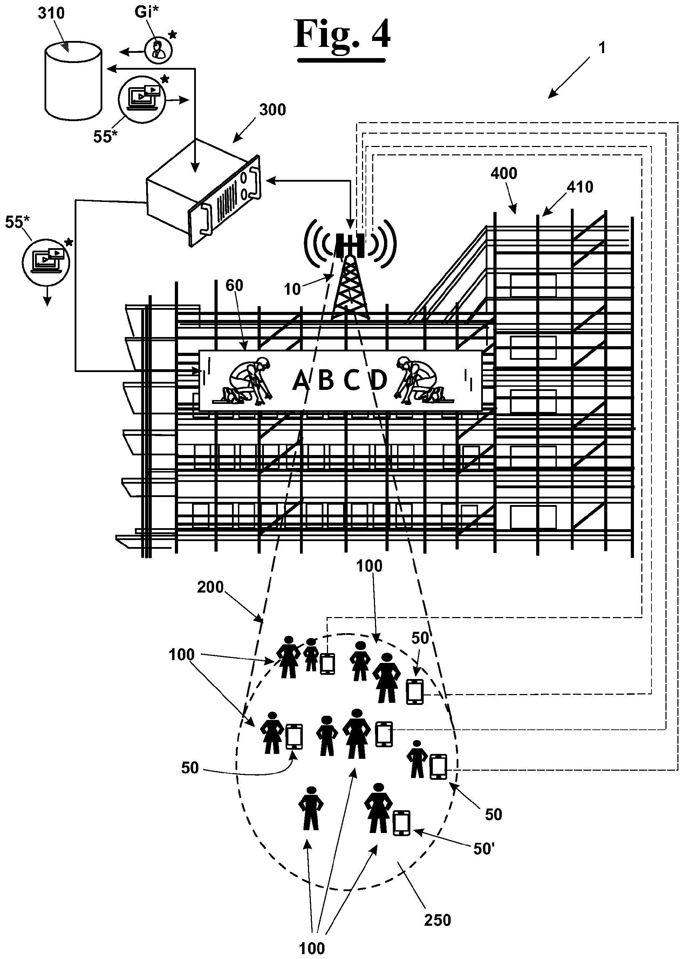

As diagrammatically shown in the further alternative embodiment of figure 4, the reproduction device 60 can be fixed to a support structure 410, preferably a reticular support structure. For example, the aforementioned reticular support structure 410 can be a scaffolding, or platforms, of the type which is normally used in the construction and reconstruction field, for the restoration, or the maintenance of public or private buildings, or structures such as viaducts, bridges, power stations.

Still with reference to figure 4, the aforementioned scaffolding can be positioned at least at a facade 405 of a building 400. In this case, the aforementioned mobile phone antenna 10, for example a 4G, or a 5G, or a 6G, micro-cell, can be installed on the roof of the aforementioned building 400. More in particular, the antenna for mobile communication 10 can be a directional antenna in such a way to transmit and/or receive solo, or anyway mainly, at specific directions. In this way, it is possible to optimize the use of the antenna 10 in such a way to receive the aforementioned data 51a-51n only from the mobile devices 10 positioned at determined areas of interest, and precisely the area from which the people 100 associated to the aforementioned mobile electronic devices 50 detected by the antenna 10 are able to watch and/or to listen the audio and/or video 55 content selected through the aforementioned procedure and transmitted by the reproduction device 60, in particular a display device.

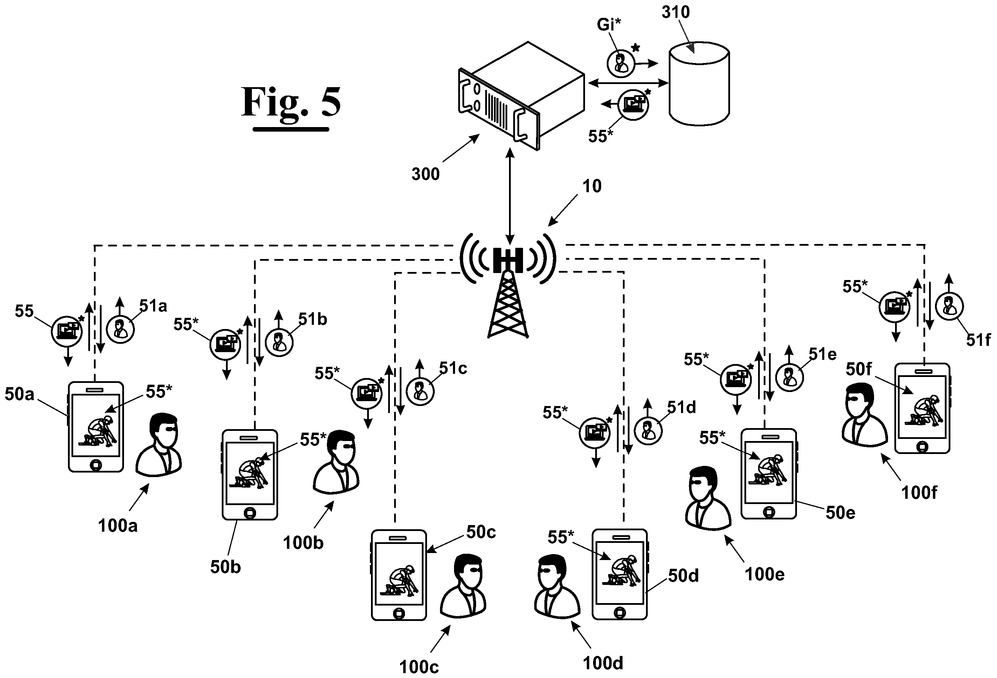

Even though in the figures from 2 to 4, the case is diagrammatically shown that the audio and/or image and/or video content 55 is reproduced by a single reproduction device 60, for example a digital screen, the possibility is also foreseen that the aforementioned content 55 can be sent by the processing unit 300 to a plurality of reproduction devices 60, for example to a determined number of mobile electronic devices 50, in figure 5 the mobile electronic devices 50a-50f from which the antenna for mobile communication 10 has received the aforementioned data 51a-51f.

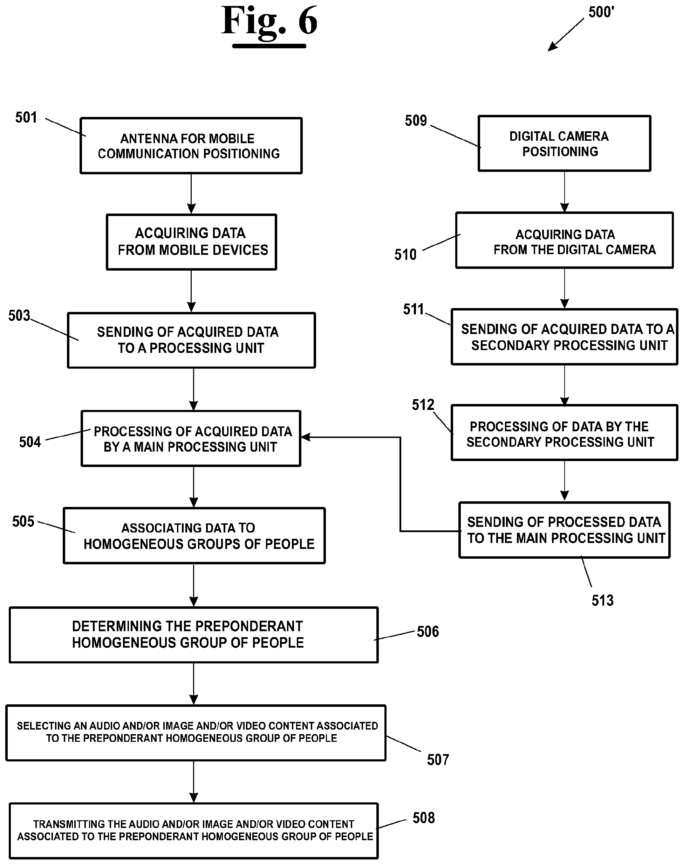

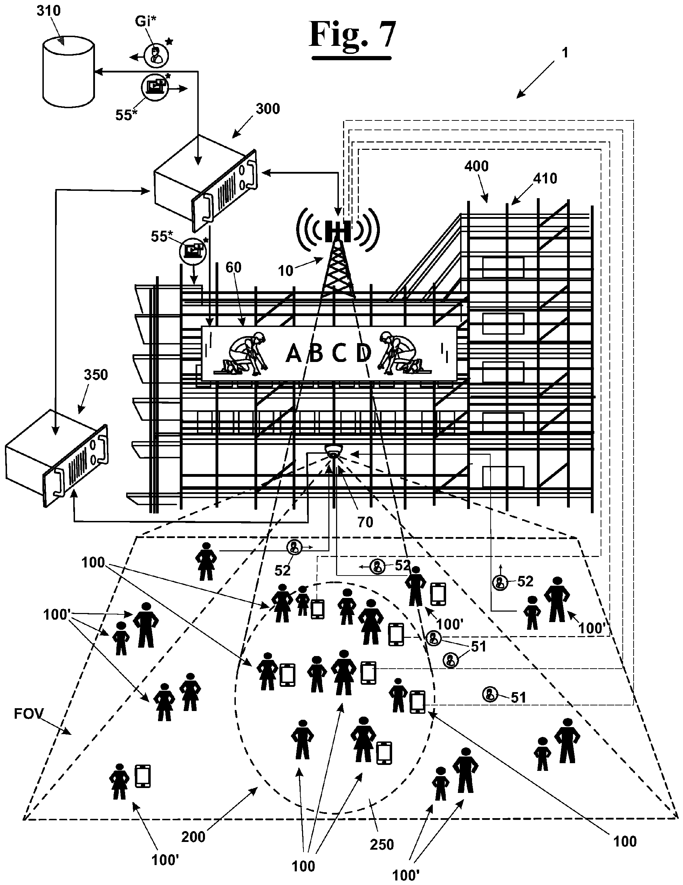

As, for example illustrated in the block diagram of figure 6, in an alternative embodiment of the invention, a step can be, furthermore, provided for acquiring at least one image, block 509, in particular by at least a digital camera 70. As, for example, illustrated in the embodiment of the system 1 of figure 7, the digital camera 70 acquires at least one image 170 of the scene which is present within its field of view, FOV. In particular, as diagrammatically shown in figure 7, the aforementioned digital camera 70 can be positioned in such a way that the field of view FOV is adapted to intersect the aforementioned coverage cone 200 of the antenna for mobile communication 10.

In particular, the aforementioned digital camera 70 is arranged to acquire the or each image 170 at a determined instant and then to send it, in real time, to a secondary processing unit 350. This is configured to process the or each acquired image, preferably by at least an artificial intelligence software, or AI, and for obtaining at least a supplementary datum 52 related to the people 100, 100' who are present in the aforementioned field of view FOV of the digital camera 70. In this way, it is possible to obtain supplementary data related to the or each person 100, 100' who is present within the aforementioned field of view FOV and comprising the number of the aforementioned people within the same. In particular, the aforementioned supplementary data can comprise, furthermore, at least a datum selected among: gender and age of the person 100, 100'. The supplementary data 52 so obtained by the secondary processing unit 350 are, then, sent in real time, to the main processing unit 300. This, therefore, combines the supplementary data 52 coming from the secondary processing unit 350 with the data 51 obtained by the mobile electronic devices 50 which are present in the coverage cone 200 of the antenna for mobile communication 10. The aggregated data 51 and 52 so obtained are, then, processed with logics of clustering as described above for the only case of data coming from the mobile electronic devices 50. In this way, the data processing and, therefore, the clustering of the people who are present in a determined area of interest 100, 100' carried out by the main processing unit 300 will most likely be corresponding to the real situation. In other words, in this way, from a statistical point of view, increases the probability that the model which has been constructed by proceeding as described above the public, understood as the collection of people 100 and 100' who are present at a determined instant ti in a determined zone of interest, and in particular both in the coverage cone of the antenna for mobile communication 10 and in the field of view of the camera 70, can correspond to the real situation and, therefore, that the reproduced audio and/or image and/or video content, in particular in the case that this is and advertising or promotional message, by the or each transmission device 60 can be highly effective.

In particular, still as diagrammatically shown in figure 7, the or each digital camera 70 can be, advantageously, positioned on the same support structure 410, for example a reticular support structure such as a scaffolding, upon which the reproduction device 60 is installed.

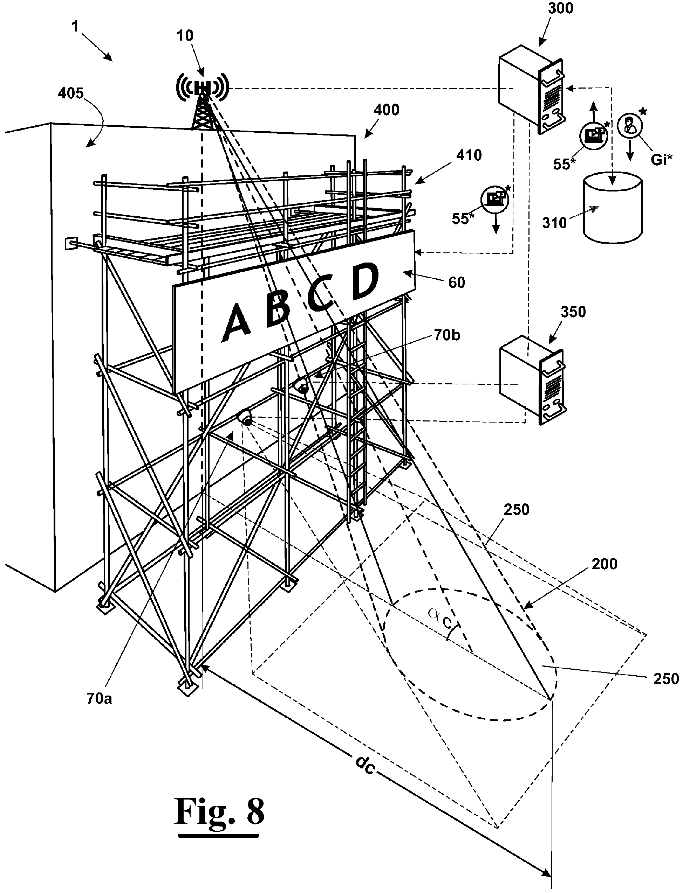

As diagrammatically shown in figure 8, the aforementioned antenna for mobile communication, preferably a directional antenna 10, can have a coverage distance dc, understood as the maximum distance from which it can receive data, or at least to receive data with a high signal intensity, comprised between 50 m and 300 m, advantageously between 50 m and 200 m, preferably between 80 m and 120 m, for example about 100 m. Still with reference to figure 8, the aforementioned directional antenna 10 can have an angle of inclination αi comprised between 30° and 60°, advantageously comprised between 35° and 55°, preferably between 40° and 50°, for example about 45°.

In an advantageous embodiment of the invention, at least a shielding member, not shown in figure for simplicity, is, furthermore, provided. More in particular, the or each shielding member is configured to shield the or each antenna for mobile communication 10 in predetermined positions. In particular, the shielding member is arranged to shield the or each antenna for mobile communication 10 in such a way that the respective predetermined coverage cone 200 covers only a predetermined geographical area, in particular that one which is arranged within a predetermined field of vision and/or listening, or viewing angle β and/or audio coverage angle β' of the audio and/or image and/or video reproduction device 60.

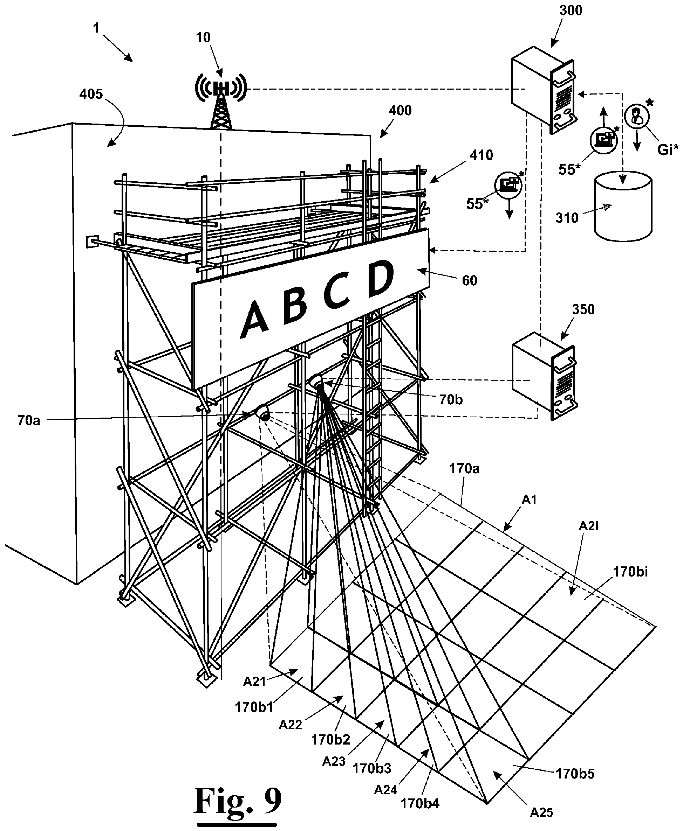

As diagrammatically shown in figure 9, in an embodiment of the invention, the aforementioned acquiring step of the images is carried out by a first digital camera 70a and a second digital camera 70b. In this case, the acquiring step comprises a first and a second acquiring step carried out respectively by the first and second digital cameras 70a and 70b. In particular, the first digital camera 70a is arranged to acquire a first image 170a having a predetermined area A1. More in particular, the aforementioned second digital camera 70b has a second field of view FOV2 and is configured to acquire a plurality of images in succession to each other 170b1, 170b2,...170bi,...170bn at different positions within the first field of view FOV, or the first image 170a acquired by the first digital camera 70a. More precisely, each image 170bi of the aforementioned plurality of images acquired by the second camera 70b with the aforementioned field of view FOV2 has an area A2i smaller than area A1 of the image acquired by the first digital camera 70a. More in detail, the second digital camera 70b is configured to acquire the aforementioned plurality of images 170b1, 170b2, 170bi...170n, by moving between an acquiring step of an image and an acquiring step of a following image in such a way to acquire each image 170bi at a respective area coincident with a predetermined portion of area A1 of the image acquired by the first digital camera 70a. What is described above does not exclude, however, that two images of the aforementioned succession of images can have respective areas with a portion in common, that means that they are partially overlapped to each other. In this case, it is possible to provide a further processing step of the images, in particular a step for excluding that the same person present in two different images can be counted 2 or more times.

In particular, the second digital camera 70b stops the acquiring step of the plurality of images 170bi once covered, or "swept", all the area A1 of mage 170a acquired by the first digital camera, that means when Σi(A2i)=A1. In this way, each image 170bi acquired by the second digital camera 70b, which corresponds to a determined position (xi,yi) within the area A1 of image 170a, can have a high resolution. Therefore, the successive processing step by the secondary processing unit 350 is more accurate. In particular, the secondary processing unit 350 can be adapted to process the aforementioned images acquired by the second camera 70b in real time to individuate the people 100 placed within each image 170bi acquired by the second digital camera 70b and, therefore, within the image 170a acquired by the first digital camera 70a, in particular by distinguishing the people 100 who are present from any other living beings, such as animals, vehicles, for example cars, motorbikes, bicycles, etc. in such a way to determine the number of people 100 who are present by identifying for each of them at least a datum selected among: gender and age.

In a possible embodiment of the invention, the aforementioned second camera 70b is adapted to rotate at least about two rotation axes to bring the field of view of the image in a determined position with respect to the field of view FOV1 of the image acquired by the first digital camera 70a.

In particular, in the case that at least a digital camera 70a, 70b, is present, the aforementioned audio and/or image and/or video content 55* reproduced by the reproduction device 60 will be visible at least from the, or each, person 100 placed at the aforementioned coverage cone 200 of the antenna for mobile communication 10, and from the or each person 100' placed in the aforementioned area A1 of the first image 170a acquired by the first digital camera 70a.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for reproducing audio and/or image and/or video contents, said method being **characterized in that** are provided the steps of:
- positioning at least one antenna for mobile communication (10) at a predetermined working position, said or each antenna for mobile communication (10) being configured to receive and/or transmit data (51a,51b,51i,...,51n) from and/or towards at least a mobile electronic device (50) placed at a determined instant (ti) within a predetermined coverage cone (200) of said antenna for mobile communication (10) and associated to at least one person (100);
- acquiring by said or each antenna for mobile communication (10) from said or each mobile electronic device (50) placed in said predetermined coverage cone (200) of data (51a,51b,51i,...,51n) relating to said or each person (100) associated to said mobile electronic device (50);
- sending said data (51a,51b,51i,...,51n) to a main processing unit (300);
- processing said acquired data by said main processing unit (300) by an artificial intelligence software (AI), said processing step comprising the steps of:
- associating on the basis of said detected data of said or each person (100) placed in said predetermined coverage cone (200) to at least one determined homogeneous group of people (Gi), each homogeneous group of people (Gi) of said plurality corresponding to a predetermined range of values of said data;
- identifying at least a preponderant homogeneous group of people (Gi*), said preponderant homogeneous group of people (Gi*) being the homogeneous group of people (G1,G2,G3,Gi,...,Gn) with the greater number of people associated to the same at the end of said associating step;
- selecting at least one audio and/or image and/or video content among a plurality of audio and/or image and/or video contents (55a,55b,55i,...,55n) placed within a predetermined database (310), said selected audio and/or image and/or video content (55*) corresponding to said preponderant homogeneous group of people (Gi*);
- sending said or each selected audio and/or image and/or video content (55*) to at least one audio and/or image and/or video reproduction device (60);
- reproducing said or each selected audio and/or image and/or video content (55*) by said or each audio and/or image and/or video reproduction device (60), in such a way that said or each selected and reproduced audio and/or image and/or video content (55*) can be enjoyed from said or each person placed within a predetermined geographical area.

2. Method for reproducing audio and/or image and/or video contents, according to claim 1, wherein an acquiring step is, furthermore, provided for acquiring at least one image by at least a digital camera (70a) having a predetermined field of view (FOV), wherein said digital camera (70a) is positioned in such a way that said predetermined field of view (FOV) is adapted to intersect said coverage cone (200), and wherein a step is, furthermore, provided for sending in real time said or each acquired image (170) to a secondary processing unit (350) configured to process said or each acquired image (170) by at least an artificial intelligence software for obtaining supplementary data (52) comprising the number of people (100,100') placed within said predetermined field of view (FOV) and to send said supplementary data (52) to said main processing unit (300).

3. Method for reproducing audio and/or image and/or video contents, according to claim 2, wherein said main processing unit (300) is configured to combine said data (51) sent by said antenna for mobile communication (10) and said supplementary data (52) sent by said or each digital camera (70) obtaining a plurality of aggregated data (51,52) on the basis of which said main processing unit (300) is adapted to carry out said processing step.

4. Method for reproducing audio and/or image and/or video contents, according to claim 2, or 3, wherein said acquiring step comprises a first acquiring step for acquiring a first image (170a) by a first digital camera (70a) having a first field of view (FOV1) and a second acquiring step for acquiring a plurality of images in succession to each other (170b1, 170b2, 170bi,...,170bn) by a second digital camera (70b) having a second field of view (FOV2) smaller than said first field of view (FOV1), wherein said first image (170a) has a first predetermined area (A1), wherein each image (170bi) of said plurality of images in succession to each other (170b1, 170b2, 170bi,...,170bn) acquired by said second digital camera (70b) has a respective predetermined area (A2i) and is a portion of said first image (170a), wherein between an acquiring step of an image of said plurality of images in succession to each other (170b1, 170b2, 170bi,...,170bn) and an acquiring step of a successive image of said plurality of images in succession to each other (170b1, 170b2, 170bi,...,170bn), said second digital camera (70b) is adapted to move, in such a way to acquire each image (170bi) of said plurality of images in succession to each other (170b1, 170b2, 170bi,...,170bn) at a respective area (A2i) coincident with a predetermined portion of said area (A1) of said first image (170a).

5. Method for reproducing audio and/or image and/or video contents, according to claim 4, wherein said second acquiring step is stopped when said second digital camera (70b) has swept all the area (A1) of said first image (170a), that means when Σi(A2i)=A1.

6. Method for reproducing audio and/or image and/or video contents, according to one or more of the previous claims, wherein said each selected audio and/or image and/or video content (55*) is reproduced by said reproduction device (60) in such a way to be enjoyed only from said or each person placed within a predetermined geographical area covered by said predetermined coverage cone (200) of said antenna for mobile communication (10).

7. Method for reproducing audio and/or image and/or video contents, according to any claim from 2 to 6, wherein said or each audio and/or image and/or video reproduction device (60) is fixed to a support structure (410), in particular a scaffolding positioned at least at a building facade (400), and wherein, said, or each, digital camera (70a,70b) is engaged to said support structure (410) and positioned in such a way that said field of view (FOV) of said or each digital camera is adapted to intersect said coverage cone (200).

8. Method for reproducing audio and/or image and/or video contents, according to claim 7, wherein said second camera (70b) is configured to rotate at least about two rotation axes to bring said second field of view (FOV2) in a determined position with respect to said first field of view (FOV1) of said image acquired by said first digital camera (70a).

9. Method for reproducing audio and/or image and/or video contents, according to one or more of the previous claims, wherein in said database (310) a plurality of audio and/or image and/or video contents (55a, 55b, 55i,...,55n) is present, each of which associated to at least one predetermined homogeneous group of people (G1,G2,Gi,...,Gn) corresponding to predetermined values of said data (51a, 51b, 51i,...,51n) .

10. Method for reproducing audio and/or image and/or video contents, according to one or more of the previous claims, wherein said audio and/or image and/or video reproduction device (60) has a predetermined angle of vision and/or a predetermined coverage audio angle (β), and wherein during said acquiring step are acquired only said data from said or each mobile electronic device (50) placed within said viewing and/or audio coverage angle (β).

11. Method for reproducing audio and/or image and/or video contents, according to one or more of the previous claims, wherein said reproducing step provides to reproduce said or each selected audio and/or image and/or video content (55*) at least by a part of said mobile electronic devices (50a-50f) from which said antenna for mobile communication (10) has received said data (51a-51f).

12. Method for reproducing audio and/or image and/or video contents, according to one or more of the previous claims, wherein a shielding step of said or each antenna for mobile communication (10) in predetermined positions is, furthermore, provided, in such a way that said predetermined coverage cone (200) comprises solo a predetermined portion positioned within said predetermined geographical area.

13. Method for reproducing audio and/or image and/or video contents, according to one or more of the previous claims, wherein said antenna for mobile communication (10) is a directional antenna having an angle of inclination (αi) comprised between 30° and 60°, in particular said directional antenna is selected among:
- a 4G micro-cell;
- a 5G micro-cell;
- a 6G micro-cell.

14. System for reproducing audio and/or image and/or video contents, said system being **characterized in that** it comprises:
- at least an antenna for mobile communication (10) positioned at a predetermined working position, said or each antenna for mobile communication (10) being configured to receive and/or transmit data (51a,51b,51i,...,51n) from and/or towards at least a mobile electronic device (50) placed at a determined instant (ti) within a predetermined coverage cone (200) of said antenna for mobile communication (10) and associated to at least one person (100);
- at least a reproduction device of audio and/or image and/or video contents (60);
- a main processing unit (300) configured to process by an artificial intelligence software (AI) said data (51a,51b,51i,...,51n) which are acquired by said antenna for mobile communication (10), said processing step comprising the steps of:
- associating said or each person (100) to at least one determined homogeneous group of people (Gi) on the basis of said data (51a, 51b, 51i,...,51n), each homogeneous group of people (Gi) of said plurality corresponding to a predetermined range of values of said data;
- identifying at least a preponderant homogeneous group of people (Gi*), said preponderant homogeneous group of people (Gi*) being the homogeneous group of people (Gi) with the greater number of people associated to the same at the end of said associating step;
- selecting at least an audio and/or image and/or video content between a plurality of audio and/or image and/or video contents present within a predetermined database (310), said selected audio and/or image and/or video content corresponding to said preponderant homogeneous group of people (Gi*);
- sending said or each selected audio and/or image and/or video content to said or each audio and/or image and/or video reproduction device (60), in such a way that said or each selected and reproduced audio and/or image and/or video content (55*) can be enjoyed by said or each person placed within a predetermined geographical area.

15. System for reproducing audio and/or image and/or video contents, according to claim 14 wherein a shielding member is, furthermore, provided configured to shield said or each antenna for mobile communication (10) in predetermined positions, in such a way that said predetermined coverage cone (200) comprises only a predetermined portion positioned within said predetermined geographical area.
